## Europäisches Patentamt

## European Patent Office

## Office européen des brevets

(11) Veröffentlichungsnummer: **0 123 020**
**B1**

(12) **EUROPÄISCHE PATENTSCHRIFT**

(45) Veröffentlichungstag der Patentschrift:
02.11.88

(51) Int. Cl.⁴: **G 02 B  7/00,** G 02 B  23/16, G 12 B  5/00

(21) Anmeldenummer: 84100843.6

(22) Anmeldetag: 27.01.84

(54) Justier- und Befestigungseinrichtung für optronische Ortungsgeräte einer Richteinheit.

(30) Priorität: 23.03.83  CH 1582/83

(43) Veröffentlichungstag der Anmeldung:
31.10.84 Patentblatt 84/44

(45) Bekanntmachung des Hinweises auf die Patenterteilung:
02.11.88 Patentblatt 88/44

(84) Benannte Vertragsstaaten:
AT CH DE FR GB IT LI NL SE

(56) Entgegenhaltungen:
EP-A-0 051 574
US-A-3 524 261

(73) Patentinhaber: **CONTRAVES AG,**
**Schaffhauserstrasse 580, CH- 8052 Zürich (CH)**

(72) Erfinder: **Arndt, Klaus, Münzelweg 327d, CH- 5506 Mägenwil (CH)**
Erfinder: **Sanvido, Saverio, Fabrikstrasse 3, CH- 8152 Glattbrugg (CH)**

EP 0 123 020 B1

## Beschreibung

Die Erfindung betrifft eine Justier- und Befestigungseinrichtung mindestens eines auswechselbaren optischen Geräts gemäss Oberbegriff des Anspruchs 1, wie sie aus der EP-A-0 051 574 bekannt ist.

Für verschiedene Anwendungen, z. B. Beispiel für militärische Anwendungen, wird zur Orts- und Entfernungsbestimmung eines Objektes vielfach eine Richteinheit eingesetzt, welche um eine Azimutachse drehbar ist und im wesentlichen auf einer Elevationsachse angeordnete, schwenkbar gelagerte, optronische Ortungsgeräte oder dergleichen aufweist. Diese Ortungsgeräte besitzen mindestens eine optische Achse und müssen an entsprechend ausgebildeten, exakt auf die Elevationsund Azimutachse der Richteinheit ausgerichteten Trägerelementen auswechselbar befestigt werden können.

Der Erfindung liegt die Aufgabe zugrunde, eine Justier- und Befestigungseinrichtung zu schaffen, welche einerseits eine exakte Justierung der relevanten optischen Achsen sowie der Referenzflächen zueinander und andererseits eine verwindungs- und verspannungsfreie Montage sowie einen schnellen Austausch der optronischen Ortungsgeräte mit exakter Reproduziergenauigkeit der genannten Achsen zueinander gewährleistet.

Diese Aufgabe wird durch die kennzeichnenden Merkmale des Anspruchs 1 gelöst.

Ein Ausführungsbeispiel gemäss der Erfindung wird nachstehend in Verbindung mit der Zeichnung näher beschrieben. Es zeigt:

| | |
|---|---|
| Fig. 1 | ein perspektivisch dargestelltes Schaubild einer um eine Azimutachse drehbaren Richteinheit mit einem ersten und einem zweiten, um eine Elevationsachse schwenkbaren optronischen Ortungsgerät, |
| Fig. 2 - 4 | jeweils eine in Schnittansicht dargestellte Einstellvorrichtung zum Ausrichten für das in vertikaler Richtung auf einem ersten Trägerelement zu montierende erste Ortungsgerät, |
| Fig. 5 | einen Schnitt gemäss der Linie V - V durch die Einstellvorrichtung gemäss Fig. 4, |
| Fig. 6 - 8 | jeweils eine teilweise in Schnittansicht dargestellte Einstellvorrichtung zum Ausrichten für das in horizontaler Richtung an einem zweiten Trägerelement zu montierende zweite Ortungsgerät, und |
| Fig. 9 | eine abgewandelte Ausführungsform der Einstellvorrichtung gemäss Figuren 6 - 8 zum Ausrichten für das in horizontaler Richtung an dem zweiten Trägerelement zu montierende zweite Ortungsgerät. |

Eine nicht näher dargestellte und um eine senkrechte Azimutachse Y in Pfeilrichtung Y' drehbare Richteinheit 100, die zum Ausrichten einer Waffe bestimmt ist, umfasst im dargestellten Ausführungsbeispiel ein erstes und ein zweites optronisches Ortungsgerät 10, 15. Die entweder als Empfänger oder Sender für IR-, Laser- visible oder andere Strahlung vorgesehenen Ortungsgeräte 10, 15 sind an schematisch dargestellten Trägerelementen 11, 16 der Richteinheit 100 zu befestigen.

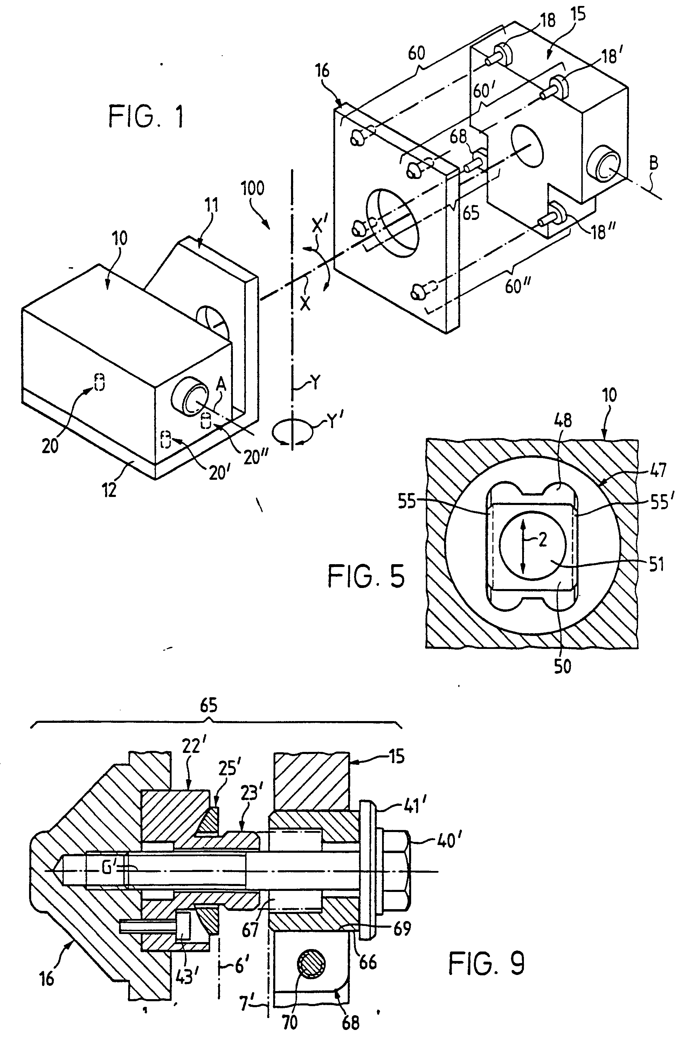

In Fig. 1 ist das erste Ortungsgerät 10 mit dem Trägerelement 11 in montiertem Zustand dargestellt, während das zweite Ortungsgerät 15, wie durch die strichpunktierten Linien dargestellt, an dem Trägerelement 16 zu koppeln und zu befestigen ist. Die Trägerelemente 11, 16 mit den beiden Ortungsgeräten 10, 15 sind zusammen mit der Richteinheit 100 um die Azimutachse Y in Pfeilrichtung Y' drehbar sowie um eine gemeinsame Elevationsachse X in Pfeilrichtung X' schwenkbar. An den Trägerelementen 11, 16 sowie an den beiden Ortungsgeräten 10, 15 sind entsprechend angeordnete und zum Justieren und Befestigen ausgebildete Einstellvorrichtungen 20, 20', 20'' oder 60, 60' 60'' vorgesehen, welche zusammen eine Justier- und Befestigungseinrichtung bilden und nachstehend im Einzelnen beschrieben werden.

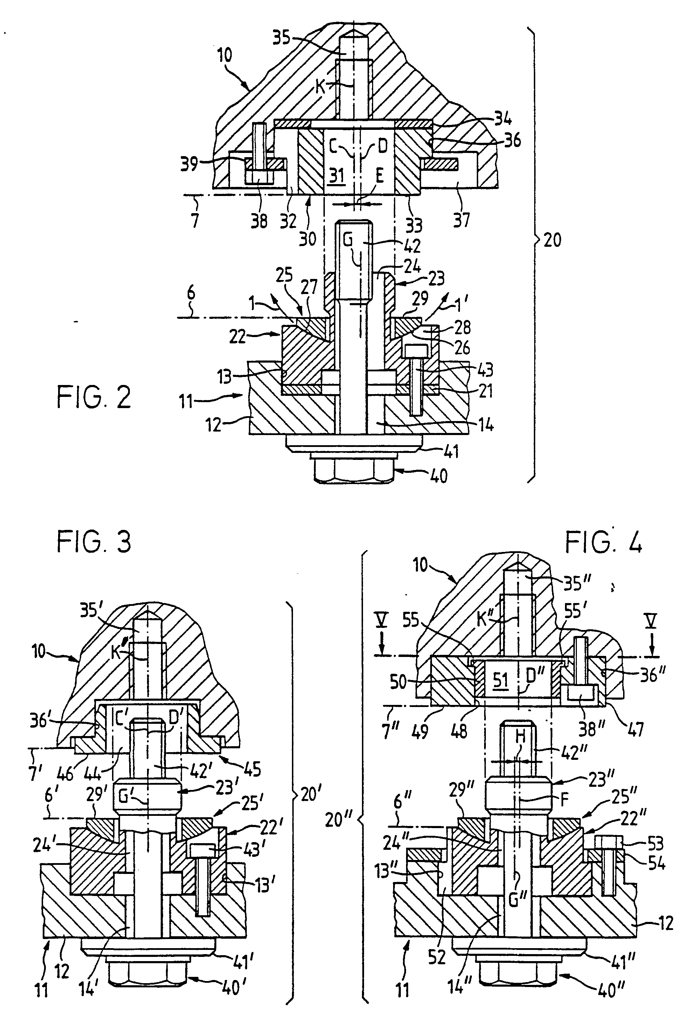

Fig. 2 zeigt die in Schnittansicht und in auseinandergezogenem Zustand dargestellte Einstellvorrichtung 20 für das in vertikaler Richtung montierbare erste Ortungsgerät 10. Diese, eine Einheit bildende erste Einstellvorrichtung 20 umfasst in integraler Ausführung im wesentlichen einen im Auflageteil 12 des Trägerelements 11 angeordneten Zentrierkörper 22 sowie einen im Ortungsgerät 10 angeordneten Exzenterkörper 30. Der in abgesetzt ausgebildeten Ausnehmungen 36, 37 des Ortungsgerätes 10 eingesetzte und im wesentlichen in der Ausnehmung 36 zentrierte Exzenterkörper 30 ist mittels eines in der Ausnehmung 37 angeordneten Ringes 39 sowie am äusseren Umfang verteilt angeordneter Schrauben 38 befestigt.

Zwischen dem Exzenterkörper 30 und der inneren Anlagefläche der Ausnehmung 36 ist eine Scheibe 34 angeordnet, welche aus einer Vielzahl einzelner, ringförmiger Schälbleche besteht. Durch Entfernen einzelner Schälbleche ist die als Referenzfläche 7 bezeichnete, ringförmige Stirnseite 33 des Exzenterkörpers 30 in bezug auf die innere Anlagefläche der Ausnehmung 36 einstellbar.

Der buchsenartig ausgebildete Exzenterkörper 30 wird von einer zylindrischen Bohrung 31 durchdrungen, welche mit ihrer Symmetrieachse

D exzentrisch, im Abstand E zu der Symmetrieachse C des Exzenterkörpers 30 angeordnet ist. In montiertem Zustand ist die Symmetrieachse C des Exzenterkörpers 30 mit der Symmetrieachse K der beiden Ausnehmungen 36, 37 sowie einer im Ortungsgerät 10 vorgesehenen Gewindebohrung 35 identisch. Bei weitgehend gelösten Schrauben 38 kann mittels eines nicht dargestellten Werkzeuges, welches in verteilt am äusseren Umfang des Exzenterkörpers 30 angeordnete Schlitze 32 einsteckbar ist, durch eine Drehbewegung des Exzenterkörpers 30 die Symmetrieachse D der Bohrung 31 und somit der Abstand E in bezug auf die identischen Symmetrieachsen C und K verstellt werden.

Der in einer im Auflageteil 12 des Trägerelements 11 vorgesehenen Ausnehmung 13 eingesetzte Zentrierkörper 22 hat einen zylindrischen Zentrierkopf 23 sowie eine konkav, kugelförmig ausgebildete Fläche 27 und wird in axialer Richtung von einer Bohrung 24 durchdrungen. Die Fläche 27 dient zur Aufnahme eines mit einer entsprechend konvex, kugelförmig ausgebildeten Fläche 26 versehenen Kalottenkörpers 25, welcher mit nicht dargestellten Mitteln, zum Beispiel mit einem Sprengring oder dergleichen, an dem Zentrierkopf 23 des Zentrierkörpers 22 gehalten ist. Die eine Baueinheit bildenden und mittels am Umfang verteilt in Ausnehmungen 28 angeordneter Schrauben 43 am Auflageteil 12 des Trägerelements 11 befestigten Teile 22, 23 und 25 haben eine gemeinsame Symmetrieachse G, welche mit einer nicht bezeichneten Symmetrieachse der im Auflageteil 12 vorgesehenen Ausnehmung 13 und Bohrung 14 identisch ist.

Zwischen dem Zentrierkörper 22 und der inneren Anlagefläche der Ausnehmung 13 ist eine aus einer Vielzahl von Schälblechen gebildete Scheibe 21 angeordnet. Durch Entfernen einzelner Schälbleche ist der Abstand der als Referenzfläche 6 bezeichneten, ringförmigen Stirnseite 29 des in dem Zentrierkörper 22 gelagerten Kalottenkörpers 25 in bezug auf die innere Anlagefläche der Ausnehmung einstellbar.

Zur Befestigung des Ortungsgerätes 10 an dem Auflageteil 12 ist ein Schraubenbolzen 40 mit Scheibe 41 vorgesehen. Der mit nicht dargestellten Mitteln gegen Herausfallen gesicherte und im wesentlichen am Trägerelement 11 gehaltene Schraubenbolzen 40 durchdringt die im Auflageteil 12 vorgesehene Bohrung I4, die Bohrung 24 des Zentrierkörpers 22 sowie die Bohrung 31 des Exzenterkörpers 30 und wird mit seinem Gewindestück 42 in die Gewindebohrung 35 des Ortungsgerätes 10 eingeschraubt. Die Bohrungen 14 und 24 sind so dimensioniert, dass beim Zusammenbau eine Exzentrizität der Symmetrieachse G des Zentrierkörpers 22 zur Symmetrieachse K der Gewindebohrung 35 ausgeglichen werden kann.

In Fig. 3 ist in Schnittansicht die zweite Einstellvorrichtung 20' dargestellt und man erkennt die mit der ersten Einstellvorrichtung 20 weitgehend identischen Teile 22', 23', 25', 40', 41', 42' und 43', welche in dem mit der Ausnehmung 13' sowie der Bohrung 14' versehenen Auflageteil 12 des Trägerelements 11 angeordnet sind. Die eine Baueinheit bildenden und in die Ausnehmung 13' des Auflageteils 12 eingesetzten Teile 22', 23' und 25' haben eine mit der nicht bezeichneten Symmetrieachse der Ausnehmung 13' identische, gemeinsame Symmetrieachse G'. Bei der Einstellvorrichtung 20' ist in einer Ausnehmung 36' des Ortungsgerätes 10 eine in nicht näher dargestellter Weise befestigte Buchse 45 angeordnet, welche von einer Bohrung 44 durchdrungen wird und eine mit der Symmetrieachse C' der Ausnehmung 36' sowie mit der Symmetrieachse K' der Gewindebohrung 35' identische Symmetrieachse D' hat.

Zur Befestigung des Ortungsgerätes 10 an dem Auflageteil 12 ist der Schraubenbolzen 40' mit der Scheibe 41' vorgesehen, welcher in nicht näher dargestellter Weise gegen Herausfallen gesichert die Bohrung 14', die Ausnehmungen 24' und 44 durchdringt und mit dem Gewindestück 42' in die Gewindebohrung 35' eingeschraubt wird. Abweichend von der ersten Einstellvorrichtung 20 gemäss Fig. 2 ist bei der Einstellvorrichtung 20' gemäss Fig. 3 der Zentrierkörper 22' mit dem Kalottenkörper 25' und der ringförmigen Stirnseite 29' einerseits, und die Buchse 45 mit der ringförmigen Stirnseite 46 andererseits, nicht auf die Referenzflächen 6' beziehungsweise 7' einstellbar.

In Fig. 4 ist in Schnittansicht die dritte Einstellvorrichtung 20'' dargestellt und man erkennt die weitgehend mit den beiden Einstellvorrichtungen 20, 20' identischen Teile 22'', 23'', 25'', 40'', 41'' und 42'', welche in dem mit der Ausnehmung 13'' und der Bohrung 14'' versehenen Auflageteil 12 angeordnet sind. Abweichend von den Zentrierkörpern 22, 22' der beiden Einstellvorrichtungen 20, 20' ist bei dem Zentrierkörper 22'' der Zentrierkopf 23'' mit der Ausnehmung 24'' sowie der Kalottenkörper 25'' mit den entsprechenden, kugelförmigen Auflageflächen mit der Symmetrieachse F exzentrisch, im Abstand H zu der Symmetrieachse G'' des Zentrierkörpers 22'' angeordnet. Der mittels eines Ringes 54 sowie am äusseren Umfang verteilt angeordneter Schrauben 53 am Auflageteil 12 befestigte Zentrierkörper 22'' weist an seinem Umfang, für den Eingriff eines nicht dargestellten Werkzeuges, verteilt angeordnete Schlitze 52 auf. Bei weitgehend gelösten Schrauben 53 kann durch eine Drehbewegung des Zentrierkörpers 22'' die Symmetrieachse F des Zentrierkopfes 23'' und somit der Abstand H in bezug auf die Symmetrieachse G'' verstellt werden, wobei die Symmetrieachse G'' identisch mit der nicht bezeichneten Symmetrieachse der Ausnehmung 13'' und Bohrung 14'' ist.

Bei der Einstellvorrichtung 20'' ist in einer Ausnehmung 36'' des Ortungsgerätes 10 ein Buchsenkörper 47 sowie ein Führungsteil 50

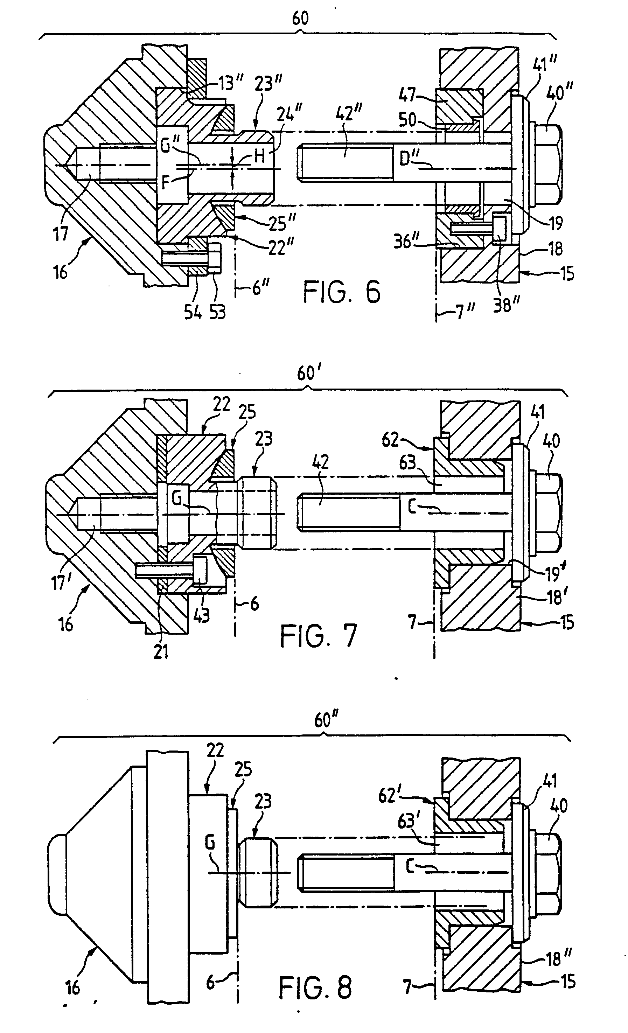

angeordnet. Der Buchsenkörper 47 wird von einer Ausnehmung 48 durchdrungen, in welcher das von einer Bohrung 51 durchdrungene Führungsteil 50, wie in Fig. 5 dargestellt, in Pfeilrichtung 2 verschiebbar gelagert ist. Das Führungsteil 50 wird im wesentlichen mittels einer Nase 55, 55' an dem Buchsenkörper 47 geführt und gegen Herausfallen gesichert, während der Buchsenkörper 47 mit verteilt angeordneten Schrauben 38'' am Ortungsgerät 10 befestigt ist. Die Ausnehmung 36'', der eingesetzte Buchsenkörper 47 sowie das Führungsteil 50 mit der Bohrung 51 haben eine gemeinsame Symmetrieachse D'', welche mit der Symmetrieachse K'' der im Ortungsgerät 10 vorgesehenen Gewindebohrung 35'' identisch ist.

Zur Befestigung des Ortungsgerätes 10 an dem Auflageteil 12 ist der Schraubenbolzen 40'' mit der Scheibe 41'' vorgesehen, wobei der Schraubenbolzen 40'' ebenfalls in nicht näher dargestellter Weise gegen Herausfallen gesichert die Bohrung 14'', die Ausnehmungen 24'' und 51 durchdringt und mit dem Gewindestück 42'' in die Gewindebohrung 35'' eingeschraubt wird. Auch bei der Einstellvorrichtung 20'' ist der Zentrierkörper 22'' mit der ringförmigen Stirnseite 29'' des Kalottenkörpers 25'' einerseits, und der Zentrierkörper 47 mit der ringförmigen Stirnseite 49 andererseits, nicht auf die Referenzfläche 6'' beziehungsweise 7'' einstellbar.

Fig. 5 zeigt einen Schnitt gemäss der Linie V - V in Fig. 4 und man erkennt den Buchsenkörper 47 mit der Ausnehmung 48 sowie das in Pfeilrichtung 2 in der Ausnehmung 48 verschiebbare und mittels der Nasen 55, 55' gesicherte Führungsteil 50 mit der Bohrung 51.

Die voran anhand der Figuren 2 bis 4 beschriebenen Einstellvorrichtungen 20, 20' und 20'' bilden im wesentlichen eine mit den Referenzflächen 6, 7 und 6', 7' sowie 6'', 7'' bezeichnete mechanische Nahtstelle zwischen dem Trägerelement 11 einerseits und dem optronischen Ortungsgerät 10 andererseits. Die an der Unterseite des Ortungsgerätes 10 angeordneten Teile 30, 45, 47 und 50 sowie die in dem Trägerelement 11 angeordneten Teile 22, 22' und 22'' werden werkseitig anhand eines in sämtlichen Eigenschaften mit dem Ortungsgerät 10 beziehungsweise mit dem Trägerelement 11 übereinstimmenden Funktionsmusters exakt auf die relevanten optischen Achsen eingestellt.

Bei der Einstellung und Justierung wird mittels der Einstellvorrichtung 20 gemäss Fig. 2 eine in horizontaler Ebene und in bezug auf die optische Achse A des Ortungsgerätes 10 orientierte Seitenverstellung und in vertikaler Richtung auf die optische Achse A bezogene Höhenverstellung erreicht. Die Einstellvorrichtung 20'' gemäss Fig. 4 dient für eine in horizontaler Ebene sowie in Richtung der optischen Achse A orientierte Verstellbewegung und ferner als Drehpunkt für die voran beschriebene Seitenverstellung des Ortungsgerätes 10. Die Einstellvorrichtung 20' gemäss Fig. 3 dient bei der Montage zur Positionierung, wobei die Ausnehmung 44 für den Zentrierkopf 23' entsprechend für die Seiten- und Längsverstellbewegung des Ortungsgerätes 10 ausgebildet ist.

Durch die an den Zentrierkörpern 22, 22' und 22'' angeordneten, wie in Fig. 2 mit Pfeilrichtung 1, 1' dargestellt, schwenkbar gelagerten Kalottenkörper 25, 25' und 25'' wird eine formschlüssige, verspannungsfreie Lagerung und Montage des Ortungsgerätes 10 an dem Trägerelement 11 erreicht.

Bei einer nicht dargestellten Variante sind für die auf die optische Achse A bezogene Höhenverstellung, anstelle der aus entfernbaren Schälblechen hergestellten Scheiben 21 und 34 gemäss Fig. 2, die Teile 30 und 22, sowie die zugehörigen Ausnehmungen 36 und 13 mit einem Gewinde mit geringer Steigung und entsprechenden Feststell-Elementen versehen, wodurch ebenfalls eine exakte Verstellung und Fixierung der Teile 22, 25 und 30 mit ihren entsprechenden Referenzflächen 6 und 7 erreicht wird.

Mittels nicht dargestellter, beispielsweise an den Teilen 22, 22' und 22'' befestigter Gummimanschetten können die Einstellvorrichtungen 20, 20' und 20'' gegen Verschmutzung und Wasser abgedichtet werden.

Fig. 6 zeigt die in Schnittansicht und auseinandergezogenem Zustand dargestellte Einstellvorrichtung 60 für das, wie in Fig. 1 dargestellt, in horizontaler Richtung montierbare und an dem Trägerelement 16 zu befestigende Ortungsgerät 15. Diese Einstellvorrichtung 60 entspricht im wesentlichen der voran anhand der Fig. 4 beschriebenen Einstellvorrichtung 20'' und man erkennt die Teile 40'', 41'', 47 und 50 sowie die Teile 22'', 23'', 25'', 53 und 54. Abweichend von der Einstellvorrichtung 20'' gemäss Fig. 4 sind die Teile 40'', 41'', 47 und 50 gemäss Fig. 6 in einer Trägerlasche 18 des Ortungsgerätes 15 angeordnet und haben eine mit einer in der Trägerlasche 18 vorgesehenen Ausnehmung 19 gemeinsame Symmetrieachse D''. Als weitere Abwandlung sei genannt, dass bei dieser Einstellvorrichtung 60 die Gewindebohrung 17 in dem Trägerelement 16 angeordnet ist, wobei die Symmetrieachse G'' des Zentrierkörpers 22'' identisch mit der nicht bezeichneten Symmetrieachse der Gewindebohrung 17 ist. Aus Gründen der besseren Uebersicht sind in Fig. 6 nicht sämtliche Positionszahlen der einzelnen, in Fig. 4 bezeichneten Teile, aufgeführt.

Die in Fig. 7 in Schnittansicht dargestellte Einstellvorrichtung 60' entspricht im wesentlichen der anhand von Fig. 2 beschriebenen Einstellvorrichtung 20 und man erkennt die identischen Teile 21, 22, 23, 25, 40 und 41. Abweichend von der Einstellvorrichtung 20 ist in einer mit einer Ausnehmung 19' versehenen Trägerlasche 18' des Ortungsgerätes 15 eine Buchse 62 angeordnet und mit nicht dargestellten Mitteln befestigt. Die mit einer zylindrischen Bohrung 63 versehene Buchse 62 wird von dem mit nicht dargestellten Mitteln gegen Herausfallen gesicherten Schraubenbolzen 40 durchdrungen. Als weitere Abwandlung sei genannt, dass bei der Einstellvorrichtung 60' gemäss Fig. 7 die mit der nicht näher bezeichneten Symmetrieachse einer Gewindebohrung 17' identische Symmetrieachse G des Zentrierkörpers 22 in montiertem Zustand mit der Symmetrieachse C der Bohrung 63 und Ausnehmung 19' identisch ist. Auch bei der Einstellvorrichtung 60' sind aus Gründen der besseren Uebersicht nicht sämtliche Positionszahlen der einzelnen, in Fig. 2 bereits bezeichneten Teile, aufgeführt.

In Fig. 8 ist in Ansicht und teilweise in Schnittansicht die in einer Lasche 18'' angeordnete Einstellvorrichtung 60'' dargestellt, welche im wesentlichen der voran anhand von Fig. 2 und 7 beschriebenen Einstellvorrichtung 20 beziehungsweise 60' entspricht und die Teile 22, 23, 25, 40, 41 und 62' umfasst. Abweichend von der Einstellvorrichtung 60' ist die Buchse 62' mit einer in bezug auf den Aussendurchmesser des Zentrierkopfes 23 grösseren Bohrung 63' versehen.

Für die Montage und zusätzliche Stabilisierung des Ortungsgerätes 15 an dem Trägerelement 16 ist eine weitere Einstellvorrichtung 65 vorgesehen, welche anhand von Fig. 9 beschrieben wird. Bei dieser Einstellvorrichtung 65 entsprechen die Teile 22', 23', 25', 43', 40' und 41' den in Fig. 3 mit gleicher Positionszahl bezeichneten Teilen der Einstellvorrichtung 20'. Abweichend von den voran beschriebenen Einstellvorrichtungen 60, 60' und 60'' ist für die Einstellvorrichtung 65 an dem Ortungsgerät 15 eine mit einer zylindrischen Ausnehmung 69 versehene und geschlitzt ausgebildete Trägerlasche 68 vorgesehen, bei welcher die voneinander getrennten Lappen durch eine nicht näher dargestellte Schraube 70 gegeneinander gezogen werden und dadurch eine in der Ausnehmung 69 angeordnete Buchse 66 eingeklemmt wird. Die in der Buchse 66 angeordnete zylindrische Bohrung 67 ist, wie bei der Einstellvorrichtung 60'' gemäss Fig. 8, ebenfalls in bezug auf den Aussendurchmesser des Zentrierkopfes 23' grösser ausgebildet.

Die voran anhand der Figuren 6 bis 9 beschriebenen Einstellvorrichtungen 60, 60', 60'' und 65 bilden im wesentlichen eine mit den jeweiligen Referenzflächen 6, 7 und 6', 7' sowie 6'', 7'' bezeichnete mechanische Nahtstelle zwischen dem Trägerelement 16 einerseits und dem in horizontaler Richtung seitlich an dem Trägerelement 16 zu befestigenden Ortungsgerät 15 andererseits. Die an den Trägerlaschen 18, 18', 18'' und 68 des Ortungsgerätes 15 angeordneten Teile sowie die Teile des Trägerelements 16 werden wie bei den Einstellvorrichtungen 20, 20' und 20'' werkseitig anhand eines in sämtlichen Eigenschaften mit dem Ortungsgerät 15 beziehungsweise mit dem Trägerelement 16 übereinstimmenden Funktionsmusters exakt auf die relevanten optischen Achsen eingestellt.

Die für die Einstellung und Justierung erforderlichen und auf die im wesentlichen vertikale Montageebene des Trägerelements 16 bezogenen Bewegungen erfolgen weitgehend analog der anhand der Einstellvorrichtungen 20, 20' und 20'' beschriebenen Höhen-, Seiten- und Längsverstellbewegungen. Die formschlüssige und verspannungsfreie Lagerung und Montage des Ortungsgerätes 15 ist ebenfalls analog ausgebildet.

## Patentansprüche

1. Justier- und Befestigungseinrichtung für optische Geräte, insbesondere für mindestens ein mit seiner optischen Achse (A oder B) auf eine relevante Achse ausrichtbares, optronisches Ortungsgerät (10 oder 15), das an einem um eine Elevationsachse (X) schwenkbaren Trägerelement (11 oder 16) einer Richteinheit (100) angeordnet ist, wobei ein Trägerelement mit drei Einstellvorrichtungen zur Festlegung einer Montageebene für das optische Gerät (10 oder 15) vorgesehen ist, dadurch gekennzeichnet,
- dass an dem optischen Gerät drei selbständige, mit den trägerseitigen Einstellvorrichtungen zusammenwirkende Einstellvorrichtungen (20, 20', 20'' oder 60, 60', 60'') vorgesehen sind,
- dass mindestens zwei der geräteseitigen Einstellvorrichtungen (20, 20', 20'' oder 60, 60', 60'') für eine unabhängige Vorjustage der optischen Achse (A oder B) des optischen Gerätes (10 oder 15) ausgebildet sind, und
- dass die Einstellvorrichtungen (20, 20', 20'' oder 60, 60', 60'') Mittel für die Zentrierung und die Montage des optischen Gerätes (10 oder 15) an dem Trägerelement (11 oder 16) aufweisen.

2. Justier- und Befestigungseinrichtung nach Anspruch 1, dadurch gekennzeichnet, dass eine Einstellvorrichtung (20'') für eine Längsverschiebung in horizontaler Montageebene sowie für eine im wesentlichen quer dazu orientierte Seitenverstellung ausgebildet ist, und dass eine andere Einstellvorrichtung (20') für die Führung der genannten Verstellbewegung sowie für die Positionierung ausgebildet ist.

3. Justier- und Befestigungseinrichtung nach Anspruch 1, dadurch gekennzeichnet, dass eine Einstellvorrichtung (60) für eine Längsverschiebung in vertikaler Montageebene sowie für eine quer dazu orientierte Seitenverstellung ausgebildet ist, und dass zwei andere Einstellvorrichtungen (60' und 60'') nur quer einstellbar sind, wobei eine Einstellvorrichtung (60'') für die Führung der genannten Verstellbewegungen sowie für die Positionierung ausgebildet ist.

4. Justier- und Befestigungseinrichtung nach Anspruch 2, dadurch gekennzeichnet, dass die Einstellvorrichtung (20) einen im Trägerelement (11) angeordneten Zentrierkörper (22) mit daran zentrisch angeordnetem Zentrierkopf (23) sowie einen schwenkbar gelagerten Kalottenkörper (25) umfasst, und dass in dem optischen Gerät (10) ein korrespondierend zum Zentrierkörper (22) angeordneter, buchsenartig ausgebildeter Exzenterkörper (30) mit exzentrisch angeordneter Bohrung (31) angeordnet ist.

5. Justier- und Befestigungseinrichtung nach Anspruch 2, dadurch gekennzeichnet, dass die Einstellvorrichtung (20') einen im Trägerelement (11) angeordneten Zentrierkörper (22') mit daran zentrisch angeordnetem Zentrierkopf (23') und schwenkbar gelagertem Kalottenkörper (25') umfasst, und dass in dem optischen Gerät (10) eine korrespondierend zum Zentrierkörper (22') angeordnete Buchse (45) mit zentrisch angeordneter Bohrung (44) angeordnet ist.

6. Justier- und Befestigungseinrichtung nach Anspruch 2, dadurch gekennzeichnet, dass die Einstellvorrichtung (20'') einen im Trägerelement (11) angeordneten Zentrierkörper (22'') mit daran exzentrisch angeordnetem Zentrierkopf (23'') und schwenkbar gelagertem Kalottenkörper (25'') umfasst, und dass in dem optischen Gerät (10) ein korrespondierend zum Zentrierkörper (22'') angeordneter Buchsenkörper (47) mit exzentrisch angeordneter Ausnehmung (48) angeordnet ist, in welcher ein mit einer Bohrung (51) versehenes, buchsenartig ausgebildetes Führungsteil (50) verschiebbar gelagert ist.

7. Justier- und Befestigungseinrichtung nach Anspruch 3, dadurch gekennzeichnet, dass die Einstellvorrichtung (60) einen im Trägerelement (16) angeordneten Zentrierkörper (22'') mit daran zentrisch angeordnetem Zentrierkopf (23'') und schwenkbar gelagertem Kalottenkörper (25'') umfasst, und dass in dem optischen Gerät (15) ein korrespondierend zum Zentrierkörper (22'') angeordneter Buchsenkörper (47) vorgesehen ist, in welchem ein Führungsteil (50) verschiebbar gelagert ist.

8. Justier- und Befestigungseinrichtung nach Anspruch 3, dadurch gekennzeichnet, dass die zwei anderen Einstellvorrichtungen (60' ,60'') je einen im Trägerelement (16) angeordneten Zentrierkörper (22) mit daran zentrisch angeordnetem Zentrierkopf (23) und schwenkbar gelagertem Kalottenkörper (25) umfassen, und dass in dem optischen Gerät (15) korrespondierend zum Zentrierkörper (22) angeordnete Buchsen (62, 62') angeordnet sind, wobei die eine Buchse (62) von einer dem Zentrierkopf (23) entsprechenden Bohrung (63) und die andere Buchse (62') von einer etwas grösseren Bohrung (63') durchdrungen ist.

## Claims

1. Adjusting and mounting device for optical apparatuses, particularly for at least one optronic detection device (10 or 15) which can be aligned with its optical axis (A or B) on a relevant axis and which is arranged on a carrier element (11 or 16), which can be rotated about an elevation axis (X), of an aligning unit (100), wherein a carrier element is provided with three adjusting devices for determining a mounting plane for the optical apparatus (10 or 15), characterised in that
- three independent adjusting devices (20, 20', 20'' or 60, 60',60''), which cooperate with the adjusting devices located on the carrier side, are provided on the optical apparatus,
- at least two of the adjusting devices (20, 20', 20'' or 60, 60', 60'') on the apparatus side are constructed for independently pre-adjusting the optical axis (A or B) of the optical apparatus (10 or 15),
and
- the adjusting devices (20, 20', 20'' or 60, 60', 60'') have means for centering and mounting the optical apparatus (10 or 15) on the carrier element (11 or 16).

2. Adjusting and mounting device according to claim 1,
characterised in that one adjusting device (20'') is constructed to carry out a longitudinal displacement in a horizontal mounting plane and also a side adjustment oriented substantially at right angles to this, and in that another adjusting device (20') is constructed for guiding the said adjusting movement and also for positioning.

3. Adjusting and mounting device according to claim 1,
characterised in that one adjusting device (60) is constructed to carry out a longitudinal displacement in a vertical mounting plane and also a side adjustment oriented at right angles to this,
and in that two other adjusting devices (60' and 60'') can only be adjusted at right angles, wherein one adjusting device (60'') is constructed for guiding the said adjusting movements and also for positioning.

4. Adjusting and mounting device according to claim 2,
characterised in that the adjusting device (20) comprises a centering body (22), which is arranged in the carrier element (11) and has a centering head (23) arranged centrally on it, and also a pivotable calotte body (25),
and in that an eccentering body (30), which is arranged corresponding to the centering body (22), has the form of a bush and has an eccentrically arranged bore hole (31), is arranged in the optical apparatus (10).

5. Adjusting and mounting device accoridng to claim 2,
characterised in that the adjusting device (20') comprises a centering body (22'), which is arranged in the carrier element (11) and has a centering head (23') arranged centrally on it and a pivotable calotte body (25'),
and in that a bush (45), arranged corresponding to the centering head (22') with a centrally arranged bore hole (44), is arranged in the optical apparatus (10).

6. Adjusting and mounting device according to claim 2,

characterised in that the adjusting device (20'') comprises a centering body (22''), which is arranged in the carrier element (11) and has a centering head (23'') arranged eccentrically on it and a pivotable calotte body (25''),

and in that a bush body (47), arranged corresponding to the centering body (22'') and with a recess (48) arranged eccentrically, is arranged in the optical apparatus (10), wherein a displaceable guiding part (50) is stored in the recess, this guiding part being provided with a bore hole (51) and having the form of a bush.

7. Adjusting and mounting device according to claim 3,

characterised in that the adjusting device (60) comprises a centering body (22''), which is arranged in the carrier element (16) and has a centering head (23'') arranged centrally on it and a pivotable calotte body (25''),

and in that a bush body (47), arranged corresponding to the centering body (22''), is provided in the optical apparatus (15), a displaceable guiding part (50) being stored in the bush body.

8. Adjusting and mounting device according to claim 3,

characterised in that the two other adjusting devices (60, 60'') each comprise a centering body (22), which is arranged in the carrier element (16) and has a centering head (23) arranged centrally on it and a pivotable calotte body (25),

and in that bushes (62, 62'), arranged corresponding to the centering body (22), are arranged in the optical apparatus (15), wherein the one bush (62) is penetrated by a bore hole (63) which corresponds to the centering head (23) and the other bush (62') is penetrated by a somewhat larger bore hole (63').

**Revendications**

1. Dispositif d'ajustage et de fixation d'appareils optiques en particulier d'au moins un dispositif de localisation (10 ou 15) optoélectronique dont l'axe optique (A ou B) est susceptible d'être aligné sur un axe correspondant, dispositif qui est prévu sur un dispositif d'alignement (100) porté par un élément de support (11 ou 16) susceptible de pivoter autour d'un axe d'élévation (X), avec un élément de support à trois dispositifs de réglage pour fixer un plan de montage du dispositif optique (10 ou 15), dispositif caractérisé en ce que

- le dispositif optique comporte trois dispositifs de réglage (20, 20', 20'' ou 60, 60', 60'') indépendants, coopérant avec les dispositifs de réglage du côté du support,

- au moins deux des dispositifs de réglage de l'appareil (20, 20', 20'' ou 60, 60', 60'') permettent un pré-ajustage de l'axe optique (A ou B) indépendant du dispositif optique (10 ou 15) et

- les dispositifs de réglage (20, 20', 20'' ou 60, 60', 60'') comportent des moyens de centrage et de montage du dispositif optique (10 ou l5) sur l'élément de support (11 ou 16).

2. Dispositif d'ajustage et de fixation selon la revendication 1, caractérisé par un dispositif de réglage (20'') permettant une translation longitudinale dans un plan de montage horizontal ainsi qu'un réglage latéral essentiellement transversal par rapport au réglage précédent et en ce qu'il est prévu un autre dispositif de réglage (20') pour le guidage du mouvement de réglage ci-dessus ainsi que pour le positionnement.

3. Dispositif d'ajustage et de fixation selon la revendication 1, caractérisé par un dispositif de réglage (60) pour un déplacement longitudinal dans le plan de montage vertical ainsi que pour un réglage latéral orienté transversalement par rapport au mouvement de réglage précédent et en ce que deux autres dispositifs de réglage (60' et 60'') sont réglables transversalement, l'un des dispositifs de réglage (60'') étant conçu pour guider les mouvements de réglage ci-dessus ainsi que pour le positionnement.

4. Dispositif d'ajustage et de fixation selon la revendication 2, caractérisé en ce que le dispositif de réglage (20) comprend un organe de centrage (22) associé a l'élément de support (11) et est muni d'une tête de centrage (23) en position centrale ainsi qu'un organe en forme de calotte (25) monté pivotant et en ce que, dans le dispositif optique (10), il est prévu un organe excentré (30) en forme de manchon, monté de manière à correspondre à l'organe de centrage (22), organe excentré (30) ayant un perçage (31) excentré.

5. Dispositif d'ajustage et de fixation selon la revendication 2, caractérisé en ce que le dispositif de réglage (20') comprend un organe de centrage (22') monté dans l'élément de support (11) et ayant une tête de centrage (23') prévue de manière centrale et un organe en forme de calotte (25') monté pivotant et en ce qu'un manchon (45) à perçage central (44) est prévu dans le dispositif optique (10) en correspondance avec l'organe de centrage (22').

6. Dispositif d'ajustage et de fixation selon la revendication 2, caractérisé en ce que le dispositif de réglage (20') comporte un organe de centrage (22'') monté sur l'élément de support (11) et portant une tête de centrage (23'') excentrée ainsi qu'un organe en forme de calotte (25'') monté pivotant et en ce que le dispositif optique (10) comporte un manchon (47) à cavité excentrée (48), manchon qui correspond à l'organe de centrage (22''), ce manchon étant muni d'un perçage (51) qui reçoit en coulissement une pièce de guidage (50) elle-même en forme de manchon.

7. Dispositif d'ajustage et de fixation selon la revendication 3, caractérisé en ce le dispositif de réglage (60) comprend un organe de centrage (22'') monté sur l'élément de support (16) et muni d'une tête de centrage (23") disposée au centre de cet organe ainsi qu'un organe en forme de calotte (25") monté pivotant, et en ce que le dispositif optique (15) comporte un manchon (47) monté en correspondance à l'organe de centrage (22"), manchon qui reçoit, en coulissement, une pièce de guidage (50).

8. Dispositif d'ajustage et de fixation selon la revendication 3, caractérisé en ce que les deux autres dispositifs de réglages (60', 60") comprennent chacun un organe de centrage (22) monté sur l'élément de support (16) avec une tête de centrage (23) disposée au centre et un organe en forme de calotte (25) monté pivotant et en ce que des manchons (62, 62') sont prévus dans le dispositif optique (15) en correspondance avec l'organe de centrage (22), l'un des manchons (62) étant traversé par un perçage (63) correspondant à la tête de centrage (23) et l'autre manchon (62') étant traversée par un perçage (63') sensiblement plus grand.

FIG. 1

FIG. 5

FIG. 9

FIG. 2

FIG. 3

FIG. 4

FIG. 6

FIG. 7

FIG. 8